# EUROPÄISCHE PATENTSCHRIFT

(11) **EP 2 910 155 B1**
(45) Veröffentlichungstag und Bekanntmachung des Hinweises auf die Patenterteilung: **14.09.2022**
(21) Anmeldenummer: 15001007.2
(22) Anmeldetag: 24.01.2011
(51) Int. Cl.: A47J 31/36, A47J 31/06

(54) **BRÜHVORRICHTUNG ZUM EXTRAHIEREN EINER PORTIONSKAPSEL**
BREWING DEVICE FOR EXTRACTING A PORTION CAPSULE
DISPOSITIF D'ÉBOUILLANTAGE DESTINÉ À EXTRAIRE UNE CAPSULE

(30) Priorität: 28.05.2010 DE 102010021849; 10.09.2010 DE 102010044945
(43) Veröffentlichungstag der Anmeldung: 26.08.2015
(62) Teilanmeldung aus: 11702929.8
(73) Patentinhaber: Eugster/Frismag AG Elektrohaushaltgeräte, 8580 Amriswil (CH)
(72) Erfinder: Fischer, Daniel, CH-8590 Romanshorn (CH); Seger, Christof, 9011 St. Gallen (CH); Hüppi, Marcel W., CH-9404 Rorschacherberg (CH)
(74) Vertreter: Loock, Jan Pieter

(56) Entgegenhaltungen:
- EP-A1- 0 891 734
- EP-A1- 1 500 357
- EP-A2- 1 369 069

## Beschreibung

### Stand der Technik

Die vorliegende Erfindung betrifft eine Brühvorrichtung zum Extrahieren einer Portionskapsel mit einem ersten Brühkammerelement und einem zweiten Brühkammerelement, wobei das erste und/oder das zweite Brühkammerelement entlang einer axialen Richtung zwischen einer Ladestellung, in welcher das erste und das zweite Brühkammerelement voneinander beabstandet sind, und einer Extraktionsstellung, in welcher das erste und das zweite Brühkammerelement eine im Wesentlichen geschlossene Brühkammer bilden, bewegbar ist.

Solche Brühvorrichtungen sind allgemein bekannt. Beispielsweise ist aus der Druckschrift EP 2 077 087 A1 eine Brühvorrichtung für eine Portionskapsel bekannt, welche ein zweites Brühkammerelement in Form eines Aufnahmeelements mit einem Hohlraum zur Aufnahme der Portionskapsel und ein erstes Brühkammerelement in Form eines Verschlusselements zum Verschließen des Hohlraums umfasst. Das Verschlusselement umfasst dabei eine Injektionsanordnung zum Einleiten von Extraktionsflüssigkeit in die Portionskapsel, während das Aufnahmeelement eine Extraktionsanordnung umfasst, um die mit einer in der Portionskapsel angeordneten Getränkesubstanz wechselwirkende Extraktionsflüssigkeit aus der Portionskapsel abzuführen und zur Bereitstellung eines Getränks einem Trinkgefäß zuzuführen. Zur Befüllung der Brühvorrichtung mit der Portionskapsel wird das Verschlusselement in eine Ladestellung überführt, in der es von dem Aufnahmeelement beabstandet ist. Anschließend wird die Portionskapsel in einen Zwischenraum zwischen dem Aufnahmeelement und dem Verschlusselement eingeführt und daraufhin das Verschlusselement in Richtung des Aufnahmeelements entlang einer axialen Richtung verschoben, wodurch die Portionskapsel in den Hohlraum des Aufnahmeelements eingeführt wird. Das Aufnahmeelement und das Verschlusselement bilden in der Extraktionsstellung eine im Wesentlichen geschlossene Brühkammer zur Extraktion der Portionskapsel. Die Getränkesubstanz umfasst insbesondere zu extrahierenden Röst- oder Instant-Kaffee. Ferner ist bekannt, derartige Brühvorrichtungen mit Perforationsmitteln auszustatten, welche die Portionskapsel zum Einleiten der Extraktionsflüssigkeit oder zum Ableiten des Getränkeextrakts während oder nach dem Schließen der Brühkammer perforieren.

Eine solche Brühvorrichtung ist beispielsweise aus der Druckschrift EP 1 369 069 A2 bekannt. Die Perforationsspitzen werden hierbei von einer federgelagerten, beweglichen Abdeckung mit entsprechenden Löchern abgedeckt. Weitere Brühvorrichtungen sind aus den Druckschriften EP 0 891 734 A1 und EP 1 500 357 A1 bekannt.

Nachteilig an solchen Brühvorrichtungen ist einerseits, dass bei einer gleichmäßigen Perforation der Portionskapsel im Bereich der Injektionsanordnung die Portionskapsel von der Extraktionsflüssigkeit auf kürzestem Weg, d.h. im Wesentlichen parallel zur axialen Richtung, und mit vergleichsweise hoher Geschwindigkeit durchströmt wird, so dass nur eine geringe Wechselwirkung zwischen der Getränkesubstanz und der Extraktionsflüssigkeit erzielt wird. Wenn die Kapsel nicht vollständig mit der Getränkesubstanz gefüllt ist, besteht zudem die Gefahr, dass die Getränkesubstanz durch die Schwerkraft in der Kapsel nach unten rutscht und die Extraktionsflüssigkeit ohne nennenswerte Wechselwirkung über die Getränkesubstanz hinweg in Richtung Austrittsöffnung fließt. Darüberhinaus besteht eine potentielle Verletzungsgefahr für den Benutzer der Brühvorrichtung, wenn er durch die Ladeöffnung mit den messerscharfen Perforationsmitteln in Berührung kommen kann.

Der Erfindung liegt daher die Aufgabe zu Grunde, eine Brühvorrichtung zum Extrahieren einer Portionskapsel bereitzustellen, welche die Nachteile des Standes der Technik nicht aufweist und eine gegenüber dem Stand der Technik deutliche verbesserte Wechselwirkung zwischen der Getränkesubstanz und der Extraktionsflüssigkeit erzielt wird, wodurch die Geschmacksqualität des extrahierten Getränks verbessert wird. Darüberhinaus soll ein vergleichsweise sicheres und fehlerfreies Einführen der Portionskapsel ermöglicht werden.

### Offenbarung der Erfindung

Diese Aufgabe wird erfindungsgemäß durch eine Brühvorrichtung nach Anspruch 1 gelöst.

Gemäß eines weiteren Gegenstand oder einer bevorzugten Weiterbildung der vorliegenden Erfindung ist vorgesehen, dass das erste Brühkammerelement eine dem zweiten Brühkammerelement zugewandte Grundfläche aufweist, wobei das erste Brühkammerelement eine Mehrzahl von ersten Perforationsmitteln aufweist, wobei die ersten Perforationsmittel innerhalb eines Winkelbereichs von maximal 230 Grad um den zentralen Punkt herum angeordnet sind. Bei einer nur teilweise mit Getränkesubstanz gefüllten Portionskapsel wird die Portionskapsel vorteilhafterweise nur dort perforiert, wo auch die Getränkesubstanz angeordnet ist (welche durch Schwerkrafteinwirkung beispielsweise nach unten gerutscht ist). Der Winkelbereich von maximal 230 Grad stellt dabei sicher, dass eine effiziente Extraktion erzielt wird, auch wenn die verrutschte Getränkesubstanz beispielsweise nach oben über die Horizontalebene hinaussteht (die Portionskapsel ist hierbei mehr als zur Hälfte mit Getränkesubstanz gefüllt). Das erste Brühkammerelement umfasst vorzugsweise wenigstens vier erste Perforationsmittel, um einen möglichst hohen Durchsatz von Extraktionsflüssigkeit zu erzielen. Die ersten Perforationsmittel sind vorzugsweise gegenüber einer sich entlang der axialen Richtung erstreckenden Ebene asymmetrisch verteilt angeordnet. Die Ebene umfasst dabei insbesondere die sich rechtwinklig zum Schwerefeld und mittig durch die Brühkammer erstreckende Horizontalebene. Die ersten Perforationsmittel sind insbesondere mit einem im Wesentlichen konstanten Radius um einen zentralen Punkt der Grundfläche herum angeordnet. In vorteilhafter Weise wird die Portionskapsel auf der dem ersten Brühkammerelement zugewandten Wandung somit insbesondere nicht zentral, sondern in ihrem Randbereich perforiert. Da die Portionskapsel im Randbereich, beispielsweise durch den Flansch der Portionskapsel und/oder durch die Verbindung mit den Seitenwänden der Portionskapsel, besonders stabil ist, weicht das Material der Portionskapsel, insbesondere der Portionskapseldeckel, an dieser Stelle während des Perforierungsvorgangs nur unwesentlich zurück, so dass ein sicherer und einfacherer Perforierungsvorgang gewährleistet wird.

Gemäß einer bevorzugten Ausführungsform der vorliegenden Erfindung umfasst das erste Brühkammerelement genau ein einziges erstes Perforationsmittel. In vorteilhafter Weise wird somit in der Ladestellung ein vergleichsweise einfaches und sicheres Einführen der Portionskapsel gewährleistet, da die Gefahr eines Hängebleibens der Portionskapsel an Perforationsmitteln im Bereich der Einführöffnung wirksam vermieden wird. Ferner ist die Verletzungsgefahr für einen Benutzer der Brühvorrichtung im Vergleich zum Stand der Technik erheblich reduziert, da nur ein einziges erstes Perforationsmittel vorhanden ist und darüberhinaus dieses eine erste Perforationsmittel von der Einführöffnung beabstandet angeordnet ist. Wenn ein Benutzer einen Finger in die Einführöffnung steckt, wird er vorteilhafterweise das erste Perforationsmittel in der Regel nicht oder nur schlecht erreichen. Vorzugsweise ist das erste Perforationsmittel im Wesentlichen in einem entlang des Schwerefelds unteren Randbereich des ersten Brühkammerelements angeordnet, um einen maximalen Abstand zwischen der Einführöffnung und dem ersten Perforationsmittel herzustellen. Das eine erste Perforationsmittel erzeugt während des Extraktionsvorgangs ferner eine vergleichsweise große Verwirbelung der Extraktionsflüssigkeit in der Portionskapsel, sowie eine möglichst lange Wechselwirkungstrecke, wodurch die Geschmacksqualität des zu extrahierenden Getränks positiv beeinflusst wird. Ferner wird die Portionskapsel in ihrem unteren Bereich von dem ersten Perforationsmittel perforiert, in welchem sich aufgrund der Schwerkrafteinwirkung in jedem Fall auch die Getränkesubstanz befindet (auch wenn die Portionskapsel nur teilweise mit Getränkesubstanz gefüllt ist).

Erfindungsgemäß ist vorgesehen, dass in der Ladestellung ein Zuführen der Portionskapsel zwischen das erste und das zweite Brühkammerelement entlang einer Laderichtung vorgesehen ist, wobei die Laderichtung im Wesentlichen rechtwinklig zur Horizontalrichtung ausgerichtet ist. Vorteilhafterweise wird die Portionskapsel somit unter Mitwirkung der Schwerkraft in die Brühvorrichtung eingeführt. Ein Benutzer muss die Portionskapsel insbesondere nur fallenlassen, wodurch der Ladevorgang wesentlich vereinfacht wird.

Es ist denkbar, dass das erste Brühkammerelement in der Ladestellung vorzugsweise gegenüber dem zweiten Brühkammerelement geneigt ist, um ein möglichst einfaches Beladen der Brühvorrichtung mit einer Portionskapsel zu ermöglichen. Die Bewegung von der Ladestellung in die Extraktionsstellung umfasst in diesem Fall beispielsweise eine axiale Verschiebung des ersten Brühkammerelements entlang der axialen Richtung, als auch ein Verschwenken des ersten Brühkammerelements parallel zum zweiten Brühkammerelement. Besonders bevorzugt ist vorgesehen, dass nach dem Befüllen der Brühkammer mit einer Portionskapsel und zum Einleiten des Brühvorgangs das erste Brühkammerelement von der Ladestellung zumindest entlang der axialen Richtung in Richtung des zweiten Brühkammerelements bewegt wird, um die Extraktionsstellung zu erreichen. Bevorzugt wird das erste Brühkammerelement dabei um einen Winkel zwischen 1 und 40 Grad, besonders bevorzugt zwischen 1 und 20 Grad und ganz besonders bevorzugt zwischen 1 und 10 Grad verschwenkt.

Gemäß einer bevorzugten Weiterbildung der vorliegenden Erfindung ist vorgesehen, dass die Brühvorrichtung derart ausgebildet ist, dass die Portionskapsel beim Bewegen des ersten und/oder des zweiten Brühkammerelements von der Ladestellung in die Extraktionsstellung im Wesentlichen sequentiell von einer Mehrzahl von ersten Perforationsmitteln des ersten Brühkammerelements perforiert wird. In vorteilhafter Weise ist somit eine Reduktion der benötigten Kraft, welche zur Perforierung der Portionskapsel mittels der ersten Perforationsmittel notwendig ist, zu erzielen, da nicht alle ersten Perforationsmittel gleichzeitig in die Portionskapsel eindringen.

Gemäß einer bevorzugten Weiterbildung der vorliegenden Erfindung ist vorgesehen, dass die Brühvorrichtung derart ausgebildet ist, dass die Portionskapsel beim Bewegen des ersten und/oder des zweiten Brühkammerelements von der Ladestellung in die Extraktionsstellung zunächst von dem wenigstens einen ersten Perforationsmittel des ersten Brühkammerelements und erst anschließend von wenigstens einem zweiten Perforationsmittel des zweiten Brühkammerelements perforiert wird. Vorteilhafterweise wird die Portionskapsel somit zuerst auf der Seite des ersten Brühkammerelements und erst anschließend auf der Seite des zweiten Brühkammerelements perforiert. Der insgesamt benötigte Kraftaufwand zur Perforation der Portionskapsel ist somit reduzierbar. Es ist auch denkbar, dass das erste Brühkammerelement eine Mehrzahl von ersten Perforationsmitteln aufweist.

Gemäß einer bevorzugten Weiterbildung der vorliegenden Erfindung ist vorgesehen, dass in der Ladestellung ein Zuführen der Portionskapsel zwischen das erste und das zweite Brühkammerelement entlang einer Laderichtung vorgesehen ist, wobei das erste Brühkammerelement wenigstens ein erstes Perforationsmittel zur Perforation der Portionskapsel aufweist und wobei die Schneidebene des wenigstens einen ersten Perforationsmittels im Wesentlichen rechtwinklig zur Laderichtung ausgerichtet ist. In vorteilhafter Weise wird somit die Verletzungsgefahr für einen Benutzer der Brühvorrichtung erheblich reduziert. Ein Benutzer, welcher beispielsweise mit seinem Finger entlang der Laderichtung in den Bereich zwischen dem ersten und dem zweiten Brühkammerelement eingreift, bewegt seinen Finger senkrecht zur Schneidebene, so dass die Gefahr einer Schnittverletzung reduziert wird. Insbesondere wird der Gefahr eines direkten Kontaktes des Fingers mit der Schnittkante des insbesondere als Schneidmesser ausgeführten wenigstens einen ersten Perforationsmittels verringert, da der Finger bei einer Bewegung entlang der Laderichtung hauptsächlich nur die stumpfe Seite des Schneidmessers berührt. Der Wortlaut "im Wesentlichen senkrecht" bedeutet im Sinne der vorliegenden Erfindung insbesondere, dass die Schneidebene sich wenigstens entlang einer zur axialen Richtung senkrechten Querrichtung senkrecht zur Laderichtung erstreckt. Bevorzugt umfasst der Winkel zwischen der Schneidebene und der Laderichtung einen Winkel zwischen 50 und 130 Grad, besonders bevorzugt zwischen 70 und 110 Grad und ganz besonders bevorzugt zwischen 80 und 100 Grad. Alternativ weist das erste Brühkammerelement eine Mehrzahl von ersten Perforationsmitteln auf.

Gemäß einer bevorzugten Weiterbildung ist vorgesehen, dass die Brühvorrichtung eine Zuführöffnung aufweist, welche zum Zuführen der Portionskapsel zwischen das erste und das zweite Brühkammerelement entlang einer Laderichtung vorgesehen ist, wobei vorzugsweise wenigstens das eine erste Perforationsmittel mit dem kleinsten Abstand zur Zuführöffnung eine Schneidebene aufweist, welche im Wesentlichen senkrecht zur Laderichtung ausgerichtet ist. Eine Verletzungsgefahr für den Benutzer geht insbesondere von dem ersten Perforationsmittel aus, welches der Zuführöffnung zum Laden der Brühvorrichtung mit einer Portionskapsel im Vergleich zu den übrigen ersten Perforationsmitteln, falls überhaupt mehr als ein erstes Perforationsmittel vorgesehen sind, am nächsten liegt, so dass schon allein durch eine entsprechende Ausrichtung dieses wenigstens einen ersten Perforationsmittels die Verletzungsgefahr erheblich reduziert wird.

Gemäß einer bevorzugten Weiterbildung ist vorgesehen, dass das wenigstens eine erste Perforationsmittel als Perforationsspitze ausgebildet ist, welche von dem ersten Brühkammerelement im Wesentlichen in Richtung des zweiten Brühkammerelements absteht. Die wenigstens eine Perforationsspitze weist vorzugsweise entlang der axialen Richtung einen im Wesentlichen linienförmigen Querschnitt auf, welcher vorzugsweise geradlinig oder gebogen ausgebildet ist. Insbesondere weist die wenigstens eine Perforationsspitze senkrecht zur axialen Richtung ein im Wesentlichen dreieckiges Profil auf. Auf diese Weise ist eine vergleichsweise einfache Perforierung mit geringem Kraftaufwand möglich, da der Einstechwiderstand vergleichsweise gering ist. Alternativ weist das erste Brühkammerelement eine Mehrzahl von ersten Perforationsmitteln auf, welche jeweils in Form einer Perforationsspitze ausgebildet sind.

Gemäß einer bevorzugten Weiterbildung ist vorgesehen, dass das erste Brühkammerelement auf einer dem zweiten Brühkammerelement zugewandten Endseite ein Perforationselement aufweist, welches einen zentralen Flächenbereich umfasst, der entlang seines Umfangs einstückig mit dem wenigstens einen Perforationsmittel verbunden ist. Das Perforationselement wird insbesondere durch Knickbiegen des wenigstens einen ersten Perforationsmittel gegenüber dem Flächenbereich hergestellt. Auf diese Weise sind eine besonders stabile Ausbildung und Befestigung des wenigstens einen ersten Perforationsmittel und gleichzeitig eine kostengünstige Herstellung möglich. Alternativ weist das Perforationselement eine Mehrzahl von ersten Perforationsmitteln auf, welche jeweils in Form einer abgebogenen Perforationsspitze ausgebildet sind.

Gemäß einer bevorzugten Weiterbildung ist vorgesehen, dass das erste Brühkammerelement und insbesondere das Perforationselement im Flächenbereich wenigstens eine Wasseraustrittsöffnung zum Zuführen von Flüssigkeit in die mittels des wenigstens einen ersten Perforationsmittel perforierte Portionskapsel aufweist, wobei vorzugsweise die Wasseraustrittsöffnung im Wesentlichen benachbart zu dem wenigstens einen ersten Perforationsmittel angeordnet ist. In vorteilhafter Weise wird die Extraktionsflüssigkeit somit direkt in den Bereich der Perforationsöffnungen in die Brühkammer eingeleitet, so dass die Extraktionsflüssigkeit nahezu ohne Druckverlust in die Portionskapsel einfließen kann. Alternativ weist das Perforationselement eine Mehrzahl von Wasseraustrittsöffnungen auf, welche jeweils benachbart zu den ersten Perforationsmitteln angeordnet sind, wenn die Brühvorrichtung eine Mehrzahl von ersten Perforationsmitteln aufweisen sollte.

Gemäß einer bevorzugten Weiterbildung ist vorgesehen, dass das zweite Brühkammerelement wenigstens ein zweites Perforationsmittel aufweist, welches asymmetrisch gegenüber der Ebene und insbesondere gegenüber der Horizontalebene angeordnet ist, wobei das zweite Perforationsmittel vorzugsweise unterhalb der Horizontalebene angeordnet ist. In vorteilhafter Weise wird somit insbesondere eine Öffnung zum Ableiten der Extraktionsflüssigkeit aus der Portionskapsel erzeugt. In vorteilhafter Weise liegt diese Öffnung unterhalb der Horizontalebene, so dass das oben erwähnte schräge Durchströmen der Portionskapsel, d.h. die Strömungsrichtung der Extraktionsflüssigkeit ist innerhalb der Portionskapsel gegenüber der axialen Richtung geneigt, unterstützt wird und somit die Geschmackqualität des extrahierten Getränks gesteigert wird. Das zweite Perforationsmittel umfasst beispielsweise ein Schneidmesser, eine Hohlnadel oder eine mit Kanälen versehende Spitze.

Gemäß einer bevorzugten Weiterbildung ist vorgesehen, dass das zweite Perforationsmittel eine vom zweiten Brühkammerelement im Wesentlichen in Richtung des ersten Brühkammerelements ragende Aufstechspitze umfasst, welche vorzugsweise zumindest über einen Teilbereich mit seitlichen Nuten versehen ist. In vorteilhafter Weise wird das Ableiten der Extraktionsflüssigkeit aus der Portionskapsel durch die seitlichen Nuten begünstigt, da die Extraktionsflüssigkeit innerhalb der Nuten zwischen dem zweiten Perforationsmittel und dem Kapselmaterial, insbesondere dem Material des Portionskapselbodens, aus der Portionskapsel heraus fließen kann.

Gemäß einer bevorzugten Weiterbildung ist vorgesehen, dass das zweite Perforationsmittel lösbar und insbesondere über einen Rast- und/oder Schraubverschluss mit dem zweiten Brühkammerelement gekoppelt ist. In vorteilhafter Weise wird somit ein Ein- und Ausbauen des zweiten Perforierungsmittels, beispielsweise zu Reinigungsund Servicezwecken, erleichtert.

Gemäß einer bevorzugten Weiterbildung ist vorgesehen, dass das zweite Brühkammerelement ein hohles Glockenelement zur Aufnahme der Portionskapsel umfasst, wobei ein Bodenbereich des Glockenelements wenigstens eine Vertiefung zum Ableiten von Extraktionsflüssigkeit aus der mittels des zweiten Perforationsmittels perforierten Portionskapsel umfasst, wobei das zweite Perforationsmittel vorzugsweise im Bereich der Vertiefung angeordnet ist und wobei die Vertiefung vorzugsweise in einen Ablaufkanal zum Abführen der Extraktionsflüssigkeit aus der Brühkammer mündet. Die Vertiefung umfasst vorzugsweise eine Stütz- und/oder Säulenstruktur, wodurch die Portionskapsel im Bereich der Vertiefung von dem zweiten Brühkammerelement sicher beabstandet wird. Auf diese Weise wird eine Verringerung des Querschnitts der Vertiefung durch den Kapselboden verhindert, so dass ein Ableiten der Extraktionsflüssigkeit zu jedem Zeitpunkt sichergestellt werden kann.

Erfindungsgemäß ist vorgesehen, dass das erste Brühkammerelement wenigstens ein erstes Perforationsmittel zur Perforation der Portionskapsel aufweist und dass die Brühvorrichtung wenigstens ein Beabstandungselement aufweist, welches derart ausgebildet ist, dass beim Zuführen der Portionskapsel zwischen das erste und das zweite Brühkamerelement in der Ladestellung ein mechanischer Kontakt zwischen der Portionskapsel und dem wenigstens einen ersten Perforationsmittel durch das Beabstandungselement verhindert wird. Beim Zuführen einer Portionskapsel zwischen das erste und zweite Brühkammerelement während der Ladestellung besteht bei Brühvorrichtungen nach dem Stand der Technik die Gefahr, dass die Portionskapsel an dem wenigstens einen ersten Perforationsmittel hängen bleibt und eine störungsfreie Zuführung der Portionskapsel verhindert wird. Bei der erfindungsgemäßen Brühvorrichtung wird in vorteilhafter Weise ein solches Hängebleiben der Portionskapsel an dem ersten Perforationsmittel durch das Beabstandungselement wirksam verhindert, indem das Beabstandungselement während der Zuführung der Portionskapsel eine Beabstandung der Portionskapsel von dem ersten Brühkammerelement und vom dem wenigstens einen ersten Perforationsmittel sicherstellt. In vorteilhafter Weise wird somit ein störungsfreies Zuführen von Portionskapseln gewährleistet. Alternativ weist das erste Brühkammerelement eine Mehrzahl von ersten Perforationsmitteln und/oder eine Mehrzahl von Beabstandungselementen auf.

Gemäß einer bevorzugten Weiterbildung ist vorgesehen, dass das erste Brühkammerelement zwei erste Perforationsmittel in Form von zwei Perforationsspitzen umfasst, wobei das Beabstandungselement zumindest teilweise zwischen den zwei Perforationsspitzen angeordnet ist und wobei in der Ladestellung das Beabstandungselement zumindest im Bereich zwischen den zwei Perforationsspitzen vom ersten Brühkammerelement beabstandet ist und wobei die zwei Perforationsspitzen vorzugsweise entlang des Schwerefelds unterhalb der Horizontalebene angeordnet sind. In vorteilhafter Weise wird somit die Gefahr des Hängebleibens der Portionskapsel an den ersten Perforationsspitzen weiter reduziert, da das Beabstandungselement insbesondere im Bereich der ersten Perforationsspitzen von dem ersten Brühkammerelement beabstandet ist und somit die Portionskapsel vor einem unmittelbaren mechanischen Kontakt mit den ersten Perforationsspitzen geschützt wird. Zudem wird hierdurch ein wirksamer Fingerschutz realisiert, durch welchen ein in die Brühkammer greifender Benutzer vor einem Kontakt mit den scharfen ersten Perforationsmitteln geschützt wird.

Erfindungsgemäß ist vorgesehen, dass das Beabstandungselement an dem ersten Brühkammerelement befestigt ist und zumindest teilweise elastisch in Richtung des zweiten Brühkammerelements vorgespannt ist und vorzugsweise dass das Beabstandungselement derart ausgebildet ist, dass es in der Extraktionsstellung im Wesentlichen vollständig am ersten Brühkammerelement anliegt. In vorteilhafter Weise ist das Beabstandungselement in der Ladestellung von dem ersten Brühkammerelement beabstandet, während es in der Extraktionsstellung am ersten Brühkammerelement anliegt, so dass der Extraktionsvorgang nicht durch das Beabstandungselement beeinträchtigt wird. Dies wird dadurch erzielt, dass das Beabstandungselement elastisch in Richtung zweites Brühkammerelement vorgespannt ist, sowie insbesondere flexibel ausgebildet ist. Beim Schließen der Brühkammer wird die Portionskapsel in Richtung des ersten Brühkammerelements gedrückt, so dass automatisch auch das Beabstandungselement in Anlage mit dem ersten Brühkammerelement gelangt.

Erfindungsgemäß ist vorgesehen, dass das Beabstandungselement ein Metallstreifen umfasst, wobei der Metallstreifen ein am ersten Brühkammerelement befestigtes erstes Ende und ein freies zweites Ende aufweist, wobei das zweite Ende in der Ladestellung vom ersten Brühkammerelement schräg in Richtung des zweiten Brühkammerelements absteht oder in der Ladestellung vorzugsweise an einer dem zweiten Brühkammerelement zugewandten Fläche des ersten Brühkammerelements anliegt. In vorteilhafter Weise steht in der Ladestellung das freie zweite Ende schräg in Richtung zweites Brühkammerelement ab, so dass das Beabstandungselement wie eine Blattfeder wirkt, welche die Portionskapsel in der Ladestellung auf Abstand zu der wenigstens einenersten Perforationsmittel hält. Alternativ ist denkbar, dass der Metallstreifen zusätzlich eine Krümmung in Richtung des zweiten Brühkammerelements aufweist, wodurch sich die Federwirkung verstärkt. Das zweite Ende kann wieder in Richtung des zweiten Brühkammerelements schräg abstehen oder alternativ auch in der Ladestellung am ersten Brühkammerelement anliegen.

Gemäß einer bevorzugten Weiterbildung ist vorgesehen, dass der Metallstreifen ein Durchgangsloch aufweist. Erfindungsgemäß ist vorgesehen, dass der Metallstreifen im Wesentlichen parallel zur Laderichtung ausgerichtet ist. Durch das Durchgangsloch strömt vorzugsweise die Extraktionsflüssigkeit in Richtung der Portionskapsel, wobei das Durchgangsloch vorzugsweise mit einer Extraktionsflüssigkeitszugangsöffnung im ersten Brühkammerelement fluchtet. Es ist denkbar, dass das Beabstandungselement alternativ zum Metallstreifen in gleicher Weise ausgebildet ist, aber aus einem Kunststoffmaterial gefertigt wird.

Offenbart wird ein Verfahren zum Betrieb einer Brühvorrichtung, wobei in einem ersten Verfahrensschritt eine Portionskapsel zwischen das erste und das zweite Brühkammerelement eingeführt wird und wobei in einem nachfolgenden zweiten Verfahrensschritt das erste und/oder zweite Brühkammerelement im Wesentlichen entlang der axialen Richtung von der Ladestellung in die Extraktionsstellung bewegt wird und wobei während des zweiten Verfahrensschrittes die Portionskapsel unterhalb der Horizontalebene zunächst von wenigstens einem ersten Perforationsmittel des ersten Brühkammerelements perforiert wird und anschließend die Portionskapsel von wenigstens einem zweiten Perforationsmittel des zweiten Brühkammerelements perforiert wird. In vorteilhafter Weise wird somit die Portionskapsel in einem entlang des Schwerefelds unteren Bereich perforiert. Die Getränkesubstanz rutscht aufgrund der Schwerkrafteinwirkung ebenfalls in den unteren Bereich. Es wird somit sichergestellt, dass eine Perforationsöffnung im Bereich der Getränkesubstanz erzeugt wird, so dass eine effiziente Wechselwirkung zwischen der Extraktionsflüssigkeit und der Getränkesubstanz während des Extraktionsvorgangs erzielt wird. Das erste Brühkammerelement weist hierbei alternativ entweder genau ein einziges erstes Perforationsmittel oder eine Mehrzahl von ersten Perforationsmitteln auf.

Gemäß einer bevorzugten Weiterbildung ist vorgesehen, dass während des zweiten Verfahrensschrittes die Portionskapsel sequentiell von einer Mehrzahl von ersten Perforationsmittel des ersten Brühkammerelements perforiert wird. Auf diese Weise wird der benötigte Kraftaufwand zur Perforierung der Portionskapsel und zum Schließen der Brühkammer verringert, sofern eine Mehrzahl von ersten Perforationsmitteln verwendet wird.

Gemäß einer bevorzugten Weiterbildung ist vorgesehen, dass im zweiten Verfahrensschritt die Portionskapsel von genau einem ersten Perforationsmittel perforiert wird. In vorteilhafter Weise wird somit in der Ladestellung ein vergleichsweise einfaches und sicheres Einführen der Portionskapsel gewährleistet. Ferner ist die Verletzungsgefahr für einen Benutzer der Brühvorrichtung im Vergleich zum Stand der Technik erheblich reduziert. Vorzugsweise ist das erste Perforationsmittel im Wesentlichen in einem entlang des Schwerefelds unteren Randbereich des ersten Brühkammerelements angeordnet, um einen maximalen Abstand zwischen der Einführöffnung und dem ersten Perforationsmittel herzustellen.

Gemäß einer bevorzugten Weiterbildung ist vorgesehen, dass in einem dritten Verfahrensschritt Extraktionsflüssigkeit in die Portionskapsel nur unterhalb der Horizontalebene und/oder innerhalb des Winkelbereichs von maximal 230 Grad eingeleitet wird. Auf diese Weise wird vorteilhafterweise sichergestellt, dass während des Extraktionsvorgangs nur dort Extraktionsflüssigkeit in die Portionskapsel eingeleitet wird, wo sich auch die Getränkesubstanz befindet (welche beispielsweise durch Schwerkrafteinwirkung nach unten gerutscht ist). Denkbar wäre demnach, dass die Portionskapsel auch oberhalb der Horizontalebene oder außerhalb des Winkelbereichs von 230 Grad perforiert wird, aber nur unterhalb der Horizontalebene und/oder nur innerhalb des Winkelbereichs von maximal 230 Grad die Extraktionsflüssigkeit eingeleitet wird.

Gemäß einer bevorzugten Weiterbildung ist vorgesehen, dass von dem wenigstens einem ersten Perforationsmitteln ein Kapseldeckel der Portionskapsel perforiert wird und dass von dem zweiten Perforationsmittel ein Kapselboden der Portionskapsel perforiert wird.

Gemäß einer bevorzugten Weiterbildung ist vorgesehen, dass im ersten Verfahrensschritt die Portionskapsel beim Zuführen zwischen das erste und zweite Brühkammerelement zumindest teilweise von einem am ersten Brühkammerelement befestigten Beabstandungselement derart geführt wird, dass ein mechanischer Kontakt zwischen der Portionskapsel und dem wenigstens einen ersten Perforationsmittel durch das Beabstandungselement verhindert wird. In vorteilhafter Weise wird die Portionskapsel beim Einführen zwischen das erste und zweite Brühkammerelement durch das Beabstandungselement auf Abstand zum ersten Brühkammerelement und somit insbesondere auch zu dem wenigstens einen ersten Perforationsmittel gehalten. Der Einführungsvorgang wird somit störunanfälliger, da ein Hängenbleiben der Portionskapsel an dem wenigstens einen ersten Perforationsmittel wirksam verhindert wird. Alternativ weist das erste Brühkammerelement eine Mehrzahl von ersten Perforationsmitteln und/oder eine Mehrzahl von Beabstandungselementen auf.

Gemäß einer bevorzugten Weiterbildung ist vorgesehen, dass während des ersten Verfahrensschrittes das Beabstandungselement zumindest teilweise von dem ersten Brühkammerelement in Richtung des zweiten Brühkammerelements absteht, wobei im zweiten Verfahrensschritt das Beabstandungselement in Anlage mit dem ersten Brühkammerelement gebracht wird. In vorteilhafter Weise wird beim Überführen des ersten Brühkammerelement von der Ladestellung in die Extraktionsstellung das Beabstandungselement automatisch in Richtung des ersten Brühkammerelements gedrückt, so dass der Extraktionsvorgang durch das Beabstandungselement nicht beeinträchtigt wird. Insbesondere steht das Beabstandungselement somit in der Extraktionsstellung nicht in die Brühkammer vor. Das Beabstandungselement wird dabei insbesondere von einer zumindest teilweise gekrümmten Formgebung in eine geradlinige Form gebogen.

Offenbart wird ferner ein Verfahren zur Herstellung einer Brühvorrichtung, wobei in einem ersten Herstellungsschritt ein Perforationselement mit einen zentralen Flächenbereich und einer Mehrzahl von ersten Perforationsmitteln ausgestanzt wird, wobei in einem zweiten Herstellungsschritt die ersten Perforationselemente gegenüber dem Flächenbereich derart knickgebogen werden, dass die ersten Perforationsmittel rechtwinklig vom Flächenbereich abstehen, und wobei in einem dritten Herstellungsschritt das Perforationselement mit dem ersten Brühkammerelement verbunden wird. Auf diese Weise sind eine besonders stabile Ausbildung der ersten Perforationsmittel, sowie eine sichere Befestigung der ersten Perforationsmittel an dem ersten Brühkammerelement möglich. Ferner ist die Herstellung besonders kostengünstig.Vorzugsweise wird das Perforationselement mit dem ersten Brühkammerelement verschraubt. Das Perforationselement umfasst insbesondere ein Blechmaterial. Vorzugsweise wird im ersten Herstellungsschritt das Perforationselement im Flächenbereich mit einer Mehrzahl von Wasseraustrittsöffnungen versehen, wobei jede der Wasseraustrittsöffnungen dabei besonders bevorzugt benachbart zu einem ersten Perforationselement angeordnet wird. In einem vierten Herstellungsschritt wird wenigstens ein zweites Perforationsmittel mit dem zweiten Brühkammerelement verbunden, wobei insbesondere eine Rast- und/oder Schraubverbindung Verwendung findet.

Verwendung einer erfindungsgemäßen Brühvorrichtung zur Zubereitung von Heißgetränken, insbesondere von Kaffee-, Milch-, Tee- und/oder Schokoladengetränken.

Die Erfindung wird nachfolgend anhand von in Zeichnungen dargestellten Ausführungsbeispielen näher erläutert. Die Zeichnungen illustrieren lediglich beispielhafte Ausführungsformen der Erfindung, welche den wesentlichen Erfindungsgedanken nicht einschränken.
- **Figuren 1a bis 1k**: zeigen schematische Schnittbildansichten einer Brühvorrichtung gemäß einer ersten Ausführungsform.
- **Figuren 2a bis 2c**: zeigen schematische Ansichten eines ersten Brühkammerelements einer Brühvorrichtung gemäß einer zweiten Ausführungsform.
- **Figur 3**: zeigt eine schematische Schnittbildansicht eines ersten Brühkammerelements einer Brühvorrichtung gemäß einer dritten Ausführungsform.
- **Figuren 4a bis 4d**: zeigen schematische Ansichten eines ersten Brühkammerelements einer erfindungsgemäßen Brühvorrichtung gemäß einer vierten Ausführungsform.
- **Figuren 5a bis 5c**: zeigen schematische Ansichten eines ersten Brühkammerelements einer erfindungsgemäßen Brühvorrichtung gemäß einer fünften Ausführungsform.
- **Figur 6**: zeigt eine schematische Ansicht eines ersten Brühkammerelements einer Brühvorrichtung gemäß einer sechsten Ausführungsform.
- **Figur 7**: zeigt eine schematische Ansicht eines ersten Brühkammerelements einer Brühvorrichtung gemäß einer siebten Ausführungsform.
- **Figur 8**: zeigt eine schematische Ansicht eines ersten Brühkammerelements einer Brühvorrichtung gemäß einer achten Ausführungsform.

In den verschiedenen Figuren sind gleiche Teile stets mit den gleichen Bezugszeichen versehen und werden daher in der Regel auch jeweils nur einmal benannt bzw. erwähnt.

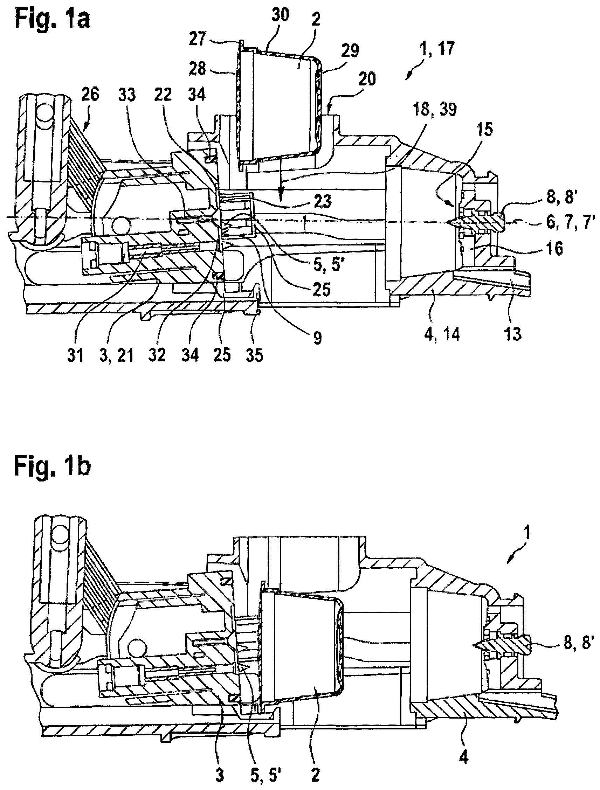

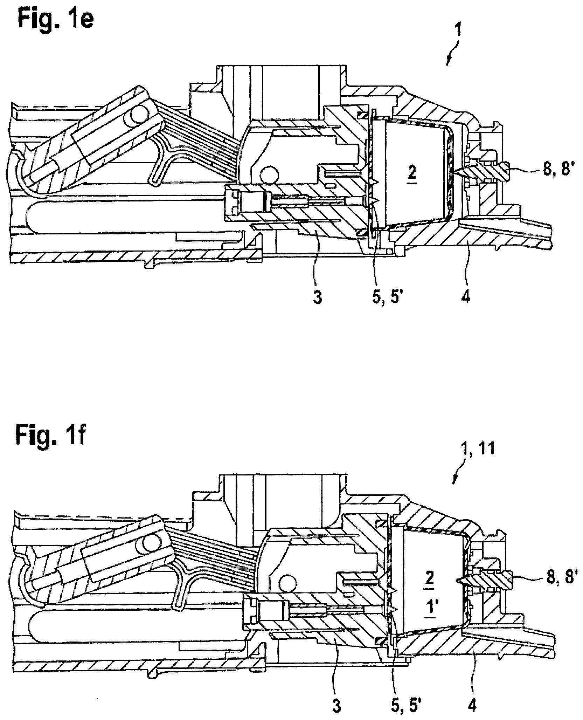

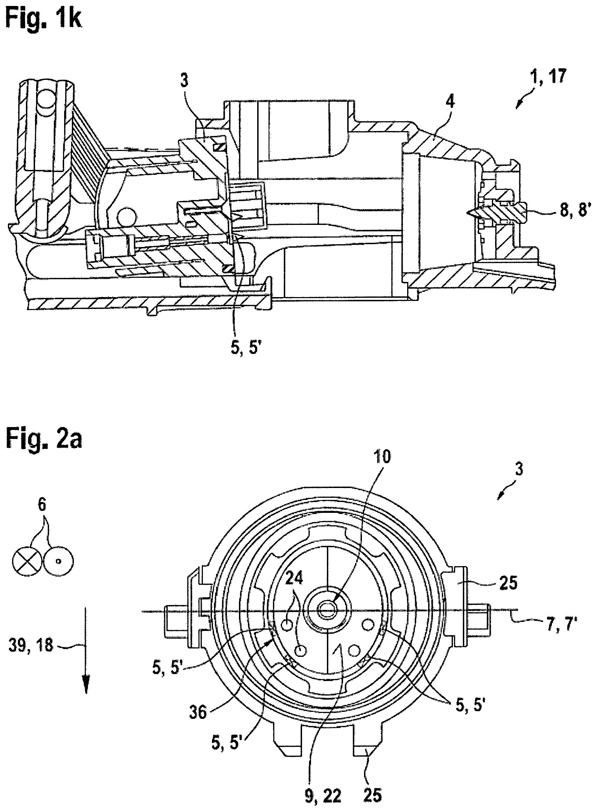

In **Figuren 1a bis 1k** sind schematische Schnittbildansichten einer Brühvorrichtung 1 zum Extrahieren einer Portionskapsel 2 gemäß einer ersten dargestellt. Die Brühvorrichtung 1 umfasst dabei ein als Aufnahmeelement bzw. teilweise hohles Glockenelement 14 ausgebildetes zweites Brühkammerelement 4 und ein als Verschlusselement 21 bzw. Kolben ausgebildetes erstes Brühkammerelement 3. Das erste Brühkammerelement 3 ist relativ zum zweiten Brühkammerelement 4 entlang einer axialen Richtung 6 zwischen einer in Figuren 1a und 1k illustrierten Ladestellung 17 und einer in Figur 1f illustrierten Extraktionsstellung 11 bewegbar.

Die Portionskapsel 2 umfasst einen aus Kunststoff gefertigten und topfförmig ausgebildeten Kegelstumpf 30. Der Kegelstumpf 30 wird mittels eines aus Kunststoffund/oder Aluminiumfolie gefertigten Kapseldeckels 28 luftdicht verschlossen. Innerhalb der Portionskapsel 2 befindet sich eine Getränkesubstanz, insbesondere ein mittels einer Extrahierflüssigkeit extrahierbares Röstkaffeepulver. Optional weist die Portionskapsel 2 ein nicht abgebildetes Filterelement auf, welches (möglicherweise vom Kapselboden 29 beabstandet) zwischen dem Kapselboden 29 und der Getränkesubstanz angeordnet ist. Der Kapseldeckel 28 ist im Bereich eines Kapselflansches 27 mit dem Kegelstumpf 30 verklebt oder verschweißt.

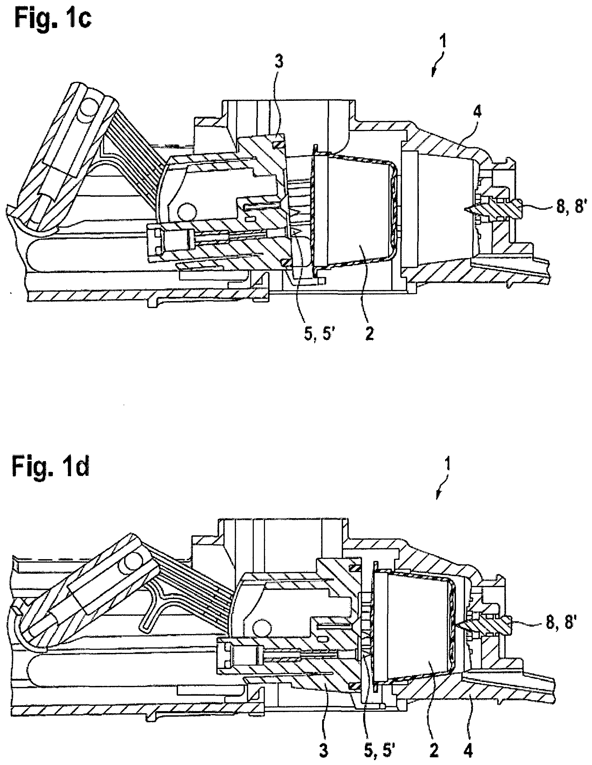

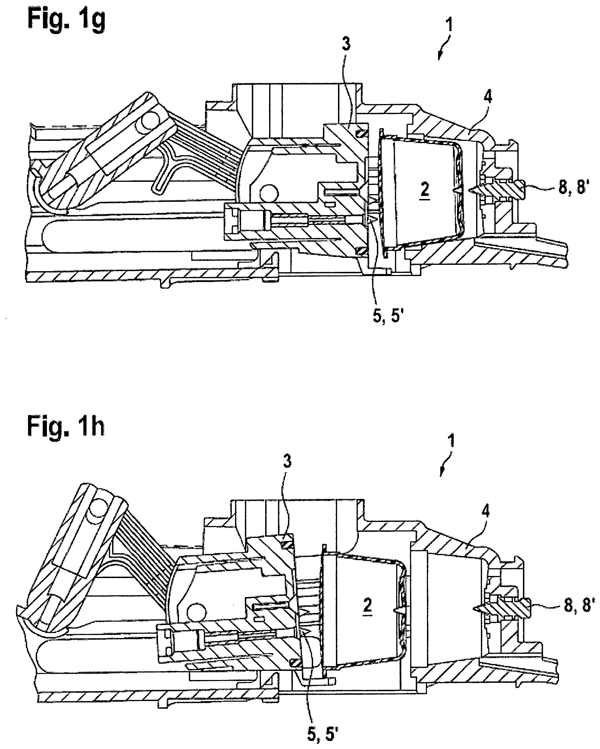

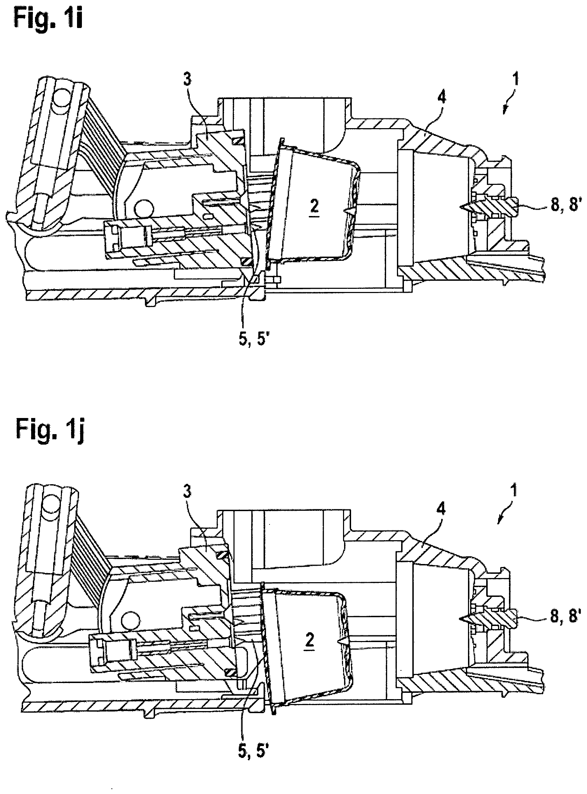

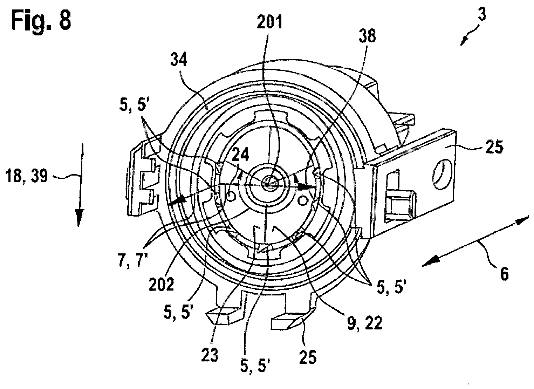

Das erste Brühkammerelement 3 weist auf einer dem zweiten Brühkammerelement 4 zugewandten Seite ein Perforationselement 22 auf, welches eine im Wesentlichen runde Grundfläche 9 umfasst, an deren Peripheriebereich in Umfangsrichtung vier erste Perforationsmittel 5 ausgebildet sind. Die ersten Perforationsmittel 5 sind dabei mit einem nahezu konstanten Radius um einen zentralen Punkt 201 (siehe Figur 8) auf der dem zweiten Brühkammerelement 4 zugewandten Grundfläche 9 des ersten Brühkammerelements 3 angeordnet. Die ersten Perforationsmittel 5 umfassen jeweils eine Perforationsspitze 5', welche in Richtung des zweiten Brühkammerelements 4 von der Grundfläche 9 absteht. Ferner sind in der Grundfläche 9 vier Wasseraustrittsöffnungen 24 ausgebildet (aus perspektivischen Gründen in den Figuren 1**a bis** 1k nicht zu erkennen), wobei immer genau eine Wasseraustrittsöffnung 24 in der Nähe einer Perforationsspitze 5' angeordnet ist. Die ersten Perforationsmittel 5 sind entlang des Schwerefelds 39 der Erde allesamt unterhalb einer als Horizontalebene 7' ausgebildeten Ebene 7 angeordnet. Die Horizontalebene 7' erstreckt sich im Wesentlichen mittig durch die Brühkammer 1' und im Wesentlichen rechtwinklig zum Schwerefeld 39.

In einer nicht im Detail dargestellten alternativen Ausführungsform weist die Brühvorrichtung 1 nur genau ein einziges erstes Perforationsmittel 5 auf, welches entlang dem Schwerefeld 39 unterhalb der Horizontalebene 7' angeordnet ist. Vorzugsweise ist das eine erste Perforationsmittel 5 hierbei im Wesentlichen in einem entlang des Schwerefelds 39 unteren Randbereich des ersten Brühkammerelements 3 angeordnet, um einen maximalen Abstand zwischen der Zuführöffnung 20 und dem ersten Perforationsmittel 5 herzustellen.

Das erste Brühkammerelement 3 weist einen Wasserzuführkanal 31 auf, welcher in eine zwischen dem ersten Brühkammerelement 3 und dem Perforationselement 22 ausgebildete Ausbuchtung 32 mündet, so dass sich durch den Wasserzuführkanal 31 zugeführte Extraktionsflüssigkeit über die Ausbuchtung 32 auf die vier Wasseraustrittsöffnungen 24 verteilen kann. Das Perforationselement 22 ist mittels einer Schraube 33 am ersten Brühkammerelement 3 befestigt. Das zweite Brühkammerelement 4 weist ein zweites Perforationsmittel 8 auf, welches eine in Richtung des ersten Brühkammerelements 3 weisende Aufstechspitze 8' umfasst, die innerhalb des Hohlraums angeordnet ist und über einen Rastverschluss lösbar mit dem zweiten Brühkammerelement 4 verbunden ist. Die Aufstechspitze 8' ist mit seitlichen Nuten versehen, welche sich parallel zur axialen Richtung 6 erstrecken. Im Bereich der Aufstechspitze 8' weist das zweite Brühkammerelement 4 eine Vertiefung 16 im Bodenbereich 15 des Hohlraums auf, in welche ein Ablaufkanal 13 mündet.

In **Figur 1a** ist das erste Brühkammerelement 3 in der Ladestellung 17 illustriert, d.h. das erste Brühkammerelement 3 ist entlang der axialen Richtung 6 von dem zweiten Brühkammerelement 4 beabstandet. In dieser Ausgangsposition wird nun entlang einer Laderichtung 18 die Portionskapsel 2 durch einen nicht abgebildeten Benutzer eingeführt. Ein als Teil des zweiten Brühkammerelements 4 ausgebildetes Gehäuse der Brühvorrichtung 1 weist dazu eine Zuführöffnung 20 auf, durch welche die Portionskapsel 2 eingeführt wird.

In **Figur 1b** ist illustriert, dass die Portionskapsel 2 unter Schwerkrafteinwirkung seitlich in den Bereich zwischen dem ersten und dem zweiten Brühkammerelement 3, 4 fällt und dort mittels nicht näher beschriebenen Haltemitteln 25, welche an dem Kapselflansch 27 der Portionskapsel 2 am ersten Brühkammerelement 3 angreifen, gehalten wird.

Im nächsten Schritt, illustriert anhand der **Figur 1c****,** wird das erste Brühkammerelement 3 über ein Kniehebelgelenk 26 zu einer Bewegung in Richtung des zweiten Brühkammerelements 4 angetrieben.

Anhand der **Figur 1d** wird illustriert, dass kurz bevor der Kapselboden 29 die Aufstechspitze 8' berührt, das erste Brühkammerelement 3 derart aufgerichtet wird, dass die Grundfläche 9 nahezu exakt senkrecht zur axialen Richtung 6 ausgerichtet ist. Die Perforationsspitzen 5' berühren anschließend des Kapseldeckel 28.

Im nächsten Schritt, dargestellt in **Figur 1e****,** wird durch die andauernde Bewegung des ersten Brühkammerelements 3 in Richtung des zweiten Brühkammerelements 4 der Kapseldeckel 28 durch die als Perforationsspitzen 5' ausgebildeten ersten Perforationsmittel 5 perforiert. Der Kapseldeckel 28 wird lediglich unterhalb der Horizontalebene 7' von den ersten Perforationsmitteln 5 perforiert. Der Kapselboden 29 ist zu diesem Zeitpunkt noch nicht perforiert.

In der oben genannten alternativen Ausführungsform wird der Kapseldeckel 28 in einem entlang der Schwerefelds 39 unterem Bereich nur durch das genau eine erste Perforationsmittel 5 perforiert.

In **Figur 1f** ist das erste Brühkammerelement 3 bis zum zweiten Brühkammerelement 4 entlang der axialen Richtung 6 in die Extraktionsstellung 11 verschoben, so dass die Portionskapsel 2 nahezu vollständig in das hohle Glockenelement 14 eingeführt ist und der Kapselboden 29 nun durch das als Aufstechdorn 8' ausgebildete zweite Perforationsmittel 8 perforiert ist. Das erste und das zweite Brühkammerelement 3, 4 bilden somit eine hermetisch geschlossene Brühkammer 1', in welcher die Portionskapsel 2 angeordnet ist. Der Kapselflansch 27 ist dabei zwischen dem ersten und dem zweiten Brühkammerelement 3, 4 insbesondere mittels eines elastischen Dichtrings 34 fest eingeklemmt.

In dieser Stellung wird der Extraktionsvorgang eingeleitet, d.h. der Brühkammer 1' wird Extraktionsflüssigkeit in Form von druckbeaufschlagtem und erhitztem Wasser zugeführt. Die Extraktionsflüssigkeit wird dabei durch den Wasserzuführkanal 31 und die Ausbuchtung 32 zu den Wasseraustrittsöffnungen 24 gefördert und gelangt dort durch die mittels der ersten Perforationsmittel 5 erzeugten Perforationsöffnungen im Kapseldeckel 28 in die Portionskapsel 2. Die Getränkesubstanz wird von der Extraktionsflüssigkeit durchströmt, so dass sich ein Getränkeextrakt bildet, welcher die Portionskapsel 2 durch das mittels des Aufstechdorns 8' im Kapselboden 29 erzeugte Perforationsloch wieder verlässt und durch die Vertiefung 16 in den Ablaufkanal 13 gelangt. Mittels des Ablaufkanals 13 wird der Getränkeextrakt vorzugsweise direkt einem nicht abgebildeten Trinkgefäß, wie einer Kaffeetasse zugeführt. Die Extraktionsflüssigkeit durchströmt die Portionskapsel 2 dabei in jedem Fall im Bereich des in der Portionskapsel 2 angeordneten Getränkesubstanz, auch wenn diese durch Schwerkrafteinwirkung in der Portionskapsel 2 nach unten rutscht.

Nach dem Extraktionsvorgang wird das erste Brühkammerelement 3 von der Extraktionsstellung 11 parallel zur axialen Richtung 6 wieder zurück in die Ladestellung 17 bewegt. Dies ist anhand von **Figuren 1g bis 1j** illustriert. Die verbrauchte Portionskapsel 2 wird dabei vom ersten Brühkammerelement 3 soweit wieder mit zurückgezogen bis der Kapselflansch 27 in Kontakt mit einem nicht näher beschriebenen Auswerfer 35 gelangt, wodurch die Portionskapsel 2 außer Eingriff mit den Haltemitteln 25 kommt und unter Schwerkrafteinwirkung selbstständig aus dem Bereich zwischen dem ersten und dem zweiten Brühkammerelement 3, 4 fällt, beispielsweise in einen nicht gezeigten Auffangbehälter.

Anschließend befindet sich das erste Brühkammerelement 3, wie in **Figur 1k** gezeigt, wieder in der Ladeposition 17, so dass eine erneute Befüllung der Brühvorrichtung 1 mit einer unverbrauchten Portionskapsel 2 gemäß Figur 1a möglich ist.

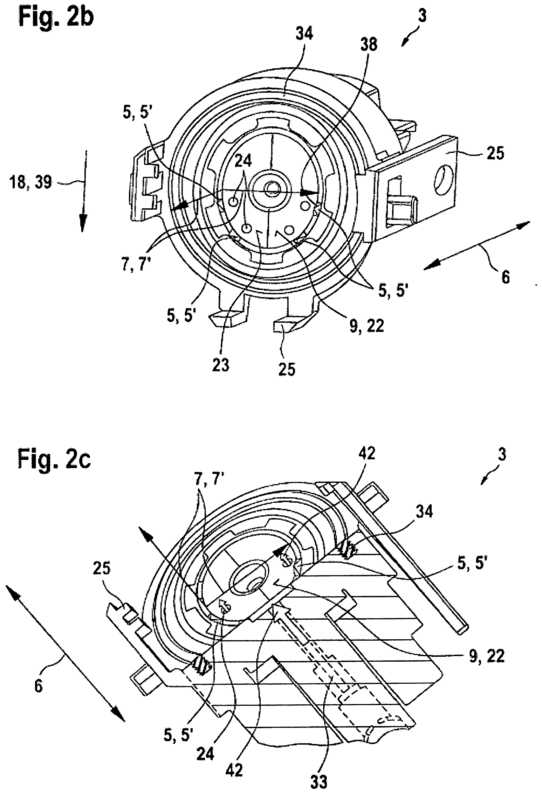

In **Figuren 2a bis 2c** sind schematische Ansichten eines ersten Brühkammerelements 3 einer Brühvorrichtung 1 gemäß einer zweiten Ausführungsform dargestellt, wobei die Brühvorrichtung 1 gemäß der zweiten Ausführungsform im Wesentlichen der in Figuren 1**a bis** 1k illustrierten Brühvorrichtung 1 gemäß der ersten Ausführungsform gleicht. Die ersten Perforationsmittel 5 sind als Perforationsspitzen 5' ausgebildet, welche in der Projektion entlang der axialen Richtung 6 nahezu einen linienförmigen Querschnitt 36 aufweisen, welcher entlang des Umfangs der Grundfläche 9 gebogen ist. In einer zur axialen Richtung 6 parallelen Ebene weisen die Perforationsspitzen 5' jeweils ein dreieckiges Profil auf, welches jeweils parallel zur Schneidebene 19 verläuft, da die Schneidkanten der Perforationsspitzen 5' jeweils durch die Schenkel 38 der Dreiecke gebildet werden. Die Perforationsspitzen 5' sind in einer zur axialen Richtung 6 senkrechten Ebene jeweils mit nahezu konstanten Radius (die Stirnfläche 9 ist leicht oval, anstelle von kreisrund) um einen zentralen Punkt 201 auf der Grundfläche 9 angeordnet. Das Perforationselement 22 mit Grundfläche 9 und Perforierungsspitzen 5' wird dabei im Rahmen eines Stanzprozesses aus einem Blech gestanzt und die Perforierungsspitzen 5' werden anschließend derart gegenüber der Grundfläche 9 knickgebogen, dass die Perforierungsspitzen 5' senkrecht vom Peripheriebereich der Grundfläche 9 abstehen. Die Perforationsspitzen 5' sind dabei entlang des Peripheriebereichs derart verteilt, dass sie gegenüber einer sich entlang der axialen Richtung 6 erstreckenden Ebene 7 asymmetrisch verteilt sind, d.h. die ersten Perforationsmittel 5 sind ausschließlich unterhalb der Ebene 7 angeordnet. Die Ebene 7 umfasst dabei insbesondere eine Horizontalebene 7', welche im Wesentlichen nahezu senkrecht zum Schwerefeld 39 und/oder zur Laderichtung 18 ausgebildet ist. In Figur 2c ist anhand von Pfeilen 42 die Strömung der Extraktionsflüssigkeit in Richtung der Brühkammer 1' illustriert.

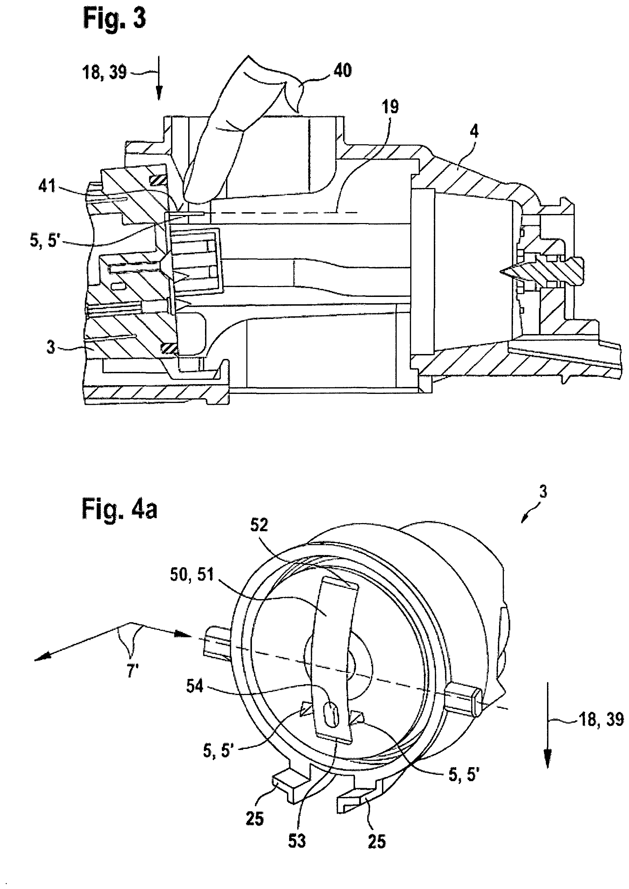

In **Figur 3** ist eine schematische Schnittbildansicht eines ersten Brühkammerelements 3 einer Brühvorrichtung 1 gemäß einer dritten Ausführungsform dargestellt, wobei die Brühvorrichtung 1 gemäß der dritten Ausführungsform im Wesentlichen der in Figuren 2a bis 2c illustrierten Brühvorrichtung 1 gemäß der zweiten Ausführungsform gleicht, wobei im Unterschied zur zweiten Ausführungsform das erstes Perforierungsmittel 5, 5' mit dem geringsten Abstand zur Zuführöffnung 20 eine Schneidebene 19 aufweist, die im Wesentlichen senkrecht zur Laderichtung 18 und/oder zum Schwerefeld 39 ausgerichtet ist. Ein Finger 40 eines Benutzers, welcher von oben durch die Zuführöffnung 20 in die Brühvorrichtung 1 hineingreift, gelangt somit lediglich mit der stumpfen Seitenfläche 41 dieses ersten Perforierungsmittels 5 in Kontakt, so dass die Verletzungsgefahr erheblich reduziert ist. Denkbar ist alternativ, dass dieses erste Perforationsmittel 5, 5' mit dem geringsten Abstand zur Zuführöffnung 20 auch unterhalb der Horizontalebene 7' angeordnet ist.

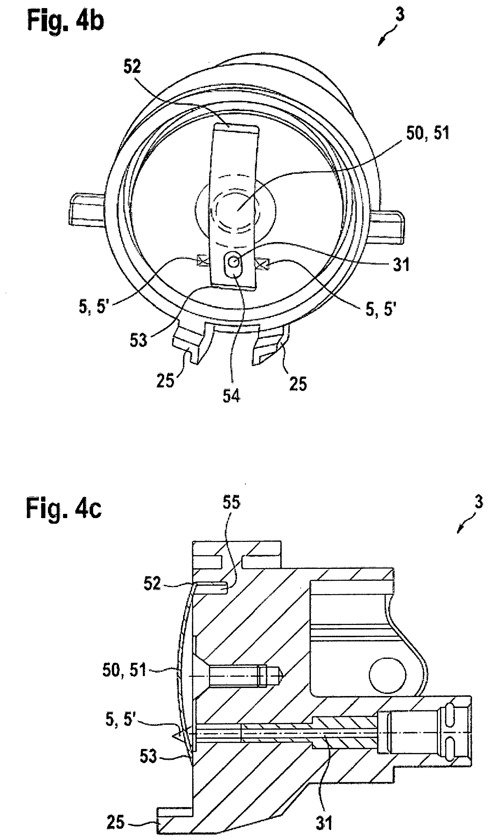

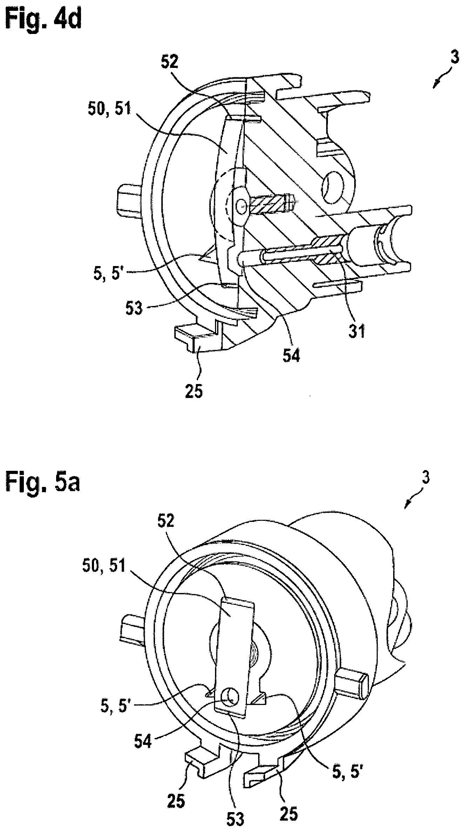

In **Figuren 4a bis 4d** sind schematische Ansichten eines ersten Brühkammerelements 3 einer erfindungsgemäßen Brühvorrichtung 1 gemäß einer vierten Ausführungsform dargestellt, wobei die Brühvorrichtung 1 gemäß der vierten Ausführungsform im Wesentlichen der in Figuren 2a bis 2c illustrierten Brühvorrichtung 1 gemäß der zweiten Ausführungsform gleicht, wobei die Brühvorrichtung 1 im Unterschied zur zweiten Ausführungsform lediglich zwei erste Perforationsmittel 5 aufweist, welche entlang des Schwerefelds 39 beide unterhalb der Horizontalebene 7' angeordnet sind. Zwischen den Perforationsspitzen 5' ist ein Beabstandungselement 50 angeordnet. Das Beabstandungselement 50 umfasst einen sich im Wesentlichen parallel zur Laderichtung 18 erstreckenden Metallstreifen 51, welcher mit einem ersten Ende 52 am ersten Brühkammerelement 3 befestigt ist. Hierzu ist das erste Ende 52, wie in Figur 4c zu sehen ist, in Richtung des ersten Brühkammerelements 3 abgewinkelt und fest in einer Ausnehmung 55 des ersten Brühkammerelements 3 eingespannt. Das zweite Ende 53 des Metallstreifens 51 ist ein freies Ende ohne Befestigung am ersten Brühkammerelement 3. Der Metallstreifen 51 weist zwischen dem ersten und dem zweiten Ende 52, 53 eine Krümmung in Richtung des zweiten Brühkammerelements 4 auf. Diese Krümmung dient dazu, eine Portionskapsel 2, welche in der Ladestellung 17 zwischen das erste und zweite Brühkammerelement 3, 4 eingeführt wird, von dem ersten Brühkammerelement 3 zu beabstanden, so dass die Portionskapsel 2 während des Einführvorgangs nicht an den zwei Perforationsspitzen 5' hängen bleibt. Beim Schließen der Brühkammer wird der Metallstreifen 51 von der Portionskapsel 2 gegen das erste Brühkammerelement 3 gedrückt, so dass es in der Extraktionsstellung 11 mit dem ersten Brühkammerelement 3 in Anlage kommt (in den Figuren nicht dargestellt) und den Extraktionsvorgang nicht beeinträchtigt. Das freie zweite Ende 53 bewegt sich hierbei entlang des Schwerefelds 39. Das Beabstandungselement 50 weist ferner ein Durchgangsloch 54 auf, welches mit dem Wasserzuführkanal 31 des ersten Brühkammerelements 3 im Wesentlichen fluchtet und eine Zuführung der Extraktionsflüssigkeit zur Portionskapsel 2 ermöglicht.

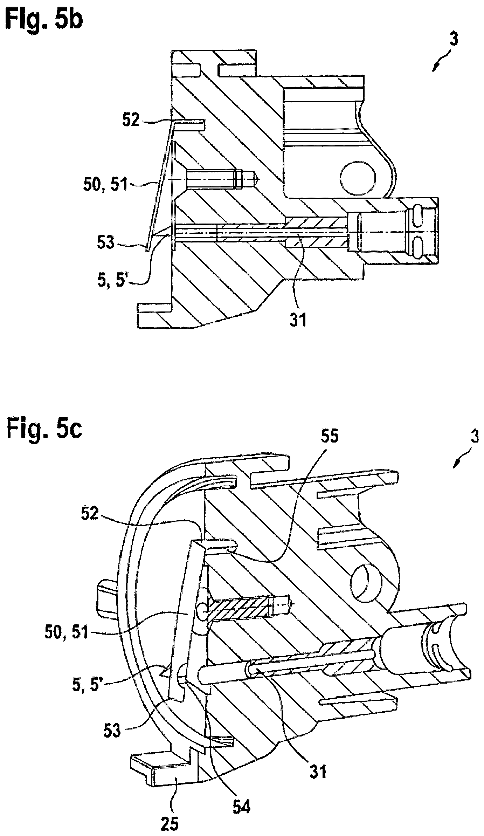

In **Figuren 5a bis 5c** sind schematische Ansichten eines ersten Brühkammerelements 3 einer erfindungsgemäßen Brühvorrichtung 1 gemäß einer fünften Ausführungsform dargestellt, wobei die Brühvorrichtung 1 gemäß der fünften Ausführungsform im Wesentlichen der in Figuren 4a bis 4d illustrierten Brühvorrichtung 1 gemäß der vierten Ausführungsform gleicht, wobei die Brühvorrichtung 1 im Unterschied zur vierten Ausführungsform ein Beabstandungselement 50 aufweist, welches keine Krümmung aufweist, sondern bei welchem stattdessen das freie zweite Ende 53 in der Ladestellung 17 schräg in Richtung des zweiten Brühkammerelement 4 vom ersten Brühkammerelement 3 absteht. Beim Überführen des ersten Brühkammerelements 3 von der Ladestellung 17 in die Extraktionsstellung 11 wird das zweite Ende 53 in Richtung des ersten Brühkammerelements 3 verschwenkt, so dass das Beabstandungselement 50 im Wesentlichen entlang seiner gesamten Länge in Anlage mit dem ersten Brühkammerelement 3 gelangt (nicht dargestellt in den Figuren).

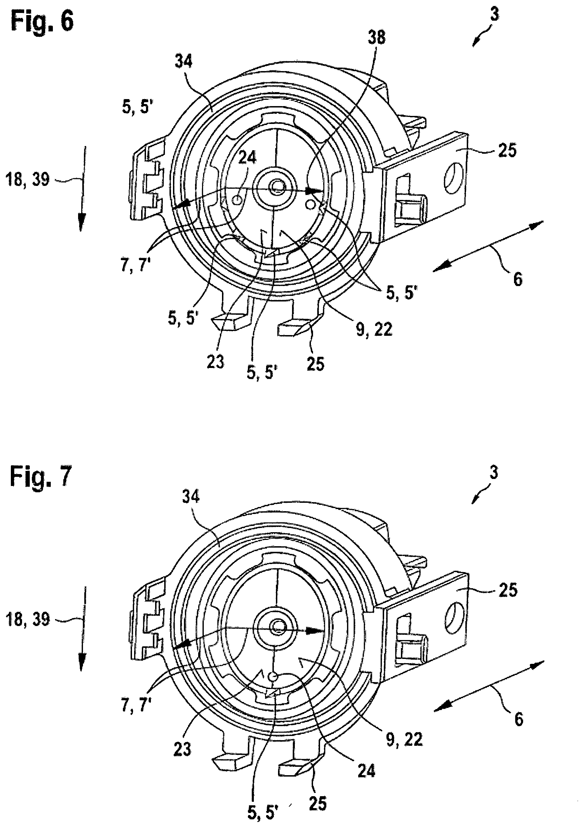

In **Figur** 6 ist eine schematische Ansicht eines ersten Brühkammerelements 3 einer Brühvorrichtung 1 gemäß einer sechsten Ausführungsform dargestellt, wobei die Brühvorrichtung 1 gemäß der sechsten Ausführungsform im Wesentlichen der in Figuren 1**a bis** 1k illustrierten Brühvorrichtung 1 gemäß der ersten Ausführungsform gleicht und in der in Figuren 1**a bis** 1k illustrierten Brühvorrichtung 1 einsetzbar ist, wobei im Unterschied zur ersten Ausführungsform das erste Brühkammerelement 3 gemäß der sechsten Ausführungsform fünf erste Perforationsmittel 5 aufweist, welche unterhalb der Horizontalebene 7' angeordnet sind.

In **Figur 7** ist eine schematische Ansicht eines ersten Brühkammerelements 3 einer Brühvorrichtung 1 gemäß einer siebten Ausführungsform dargestellt, wobei die Brühvorrichtung 1 gemäß der siebten Ausführungsform im Wesentlichen der in Figuren 1a bis 1k illustrierten Brühvorrichtung 1 gemäß der ersten Ausführungsform gleicht und in der in Figuren 1**a bis** 1k illustrierten Brühvorrichtung 1 einsetzbar ist, wobei im Unterschied zur ersten Ausführungsform das erste Brühkammerelement 3 nur ein einziges erstes Perforationsmittel 5 aufweist. Dieses einzige erste Perforationsmittel 5 ist dabei im Wesentlichen in einem entlang des Schwerefelds 39 unteren Randbereich des ersten Brühkammerelements 3 angeordnet, um einen maximalen Abstand zwischen der Zuführöffnung 20 und dem ersten Perforationsmittel 3 herzustellen und so die Verletzungsgefahr für einen Benutzer der Brühvorrichtung 1 zu reduzieren.

In **Figur 8** ist eine schematische Ansicht eines ersten Brühkammerelements 3 einer Brühvorrichtung 1 gemäß einer achten Ausführungsform dargestellt, wobei die Brühvorrichtung 1 gemäß der achten Ausführungsform im Wesentlichen der in Figuren 1a bis 1k illustrierten Brühvorrichtung 1 gemäß der ersten Ausführungsform gleicht und in der in Figuren 1**a bis** 1k illustrierten Brühvorrichtung 1 einsetzbar ist, wobei im Unterschied zur ersten Ausführungsform das erste Brühkammerelement 3 eine Mehrzahl von ersten Perforationsmitteln 5 in Form von Perforationsspitzen 5' aufweist (insgesamt sieben erste Perforationsmittel 5), die um einen zentralen Punkt 201 auf der dem zweiten Brühkammerelement 4 zugewandten Stirnfläche 9 des ersten Brühkammerelements 3 angeordnet sind. Die ersten Perforationsmittel 5 sind dabei nicht nur unterhalb der Horizontalebene 7 angeordnet, sondern stattdessen mit einem im Wesentlichen konstanten Radius in einem Winkelbereich 202 von ca. 230 Grad um den zentralen Punkt 201 herum angeordnet.

### Bezugszeichenliste

- 1: Brühvorrichtung
- 1': Brühkammer
- 2: Portionskapsel
- 3: Erstes Brühkammerelement
- 4: Zweites Brühkammerelement
- 5: Ersten Perforationsmitteln
- 5': Perforationsspitzen
- 6: Axiale Richtung
- 7: Ebene
- 7': Horizontalebene
- 8: Zweite Perforationsmittel
- 8': Aufstechspitze
- 9: Grundfläche
- 11: Extraktionsstellung
- 13: Ablaufkanal
- 14: Hohles Glockenelement, Aufnahmeelement
- 15: Bodenbereich
- 16: Vertiefung
- 17: Ladestellung
- 18: Laderichtung
- 19: Schneidebene
- 20: Zuführöffnung
- 21: Verschlusselement, Kolben
- 22: Perforationselement
- 23: Flächenbereich
- 24: Wasseraustrittsöffnungen
- 25: Haltemittel
- 26: Kniehebelgelenk
- 27: Kapselflansch
- 28: Kapseldeckel
- 29: Kapselboden
- 30: Kegelstumpf
- 31: Wasserzuführkanal
- 32: Ausbuchtung
- 33: Schraube
- 34: Dichtungsring
- 35: Auswerfer
- 36: Linienförmiger Querschnitt
- 38: Schenkel
- 39: Schwerefeld
- 40: Finger
- 41: Seitenfläche
- 42: Strömungsrichtung
- 50: Beabstandungselement
- 51: Metallstreifen
- 52: Erstes Ende
- 53: Zweites Ende
- 54: Durchgangsloch
- 55: Ausnehmung
- 201: Zentraler Punkt
- 202: Winkelbereich

## Patentansprüche

1. Brühvorrichtung (1) zum Extrahieren einer Portionskapsel (2) mit einem ersten Brühkammerelement (3) und einem zweiten Brühkammerelement (4), wobei das erste und/oder das zweite Brühkammerelement (3, 4) entlang einer axialen Richtung (6) zwischen einer Ladestellung (17), in welcher das erste und das zweite Brühkammerelement (3, 4) voneinander beabstandet sind, und einer Extraktionsstellung (11), in welcher das erste und das zweite Brühkammerelement (3, 4) eine im Wesentlichen geschlossene Brühkammer (1') bilden, bewegbar ist, wobei in der Ladestellung (17) ein Zuführen der Portionskapsel (2) zwischen das erste und das zweite Brühkammerelement (3, 4) entlang einer Laderichtung (18) vorgesehen ist, wobei die Laderichtung (18) rechtwinklig zur Horizontalebene (7') ausgerichtet ist, **dadurch gekennzeichnet, dass** das erste Brühkammerelement (3) wenigstens ein erstes Perforationsmittel (5) zur Perforation der Portionskapsel (2) aufweist und dass die Brühvorrichtung (1) ein Beabstandungselement (50) aufweist, welches derart ausgebildet ist, dass beim Zuführen der Portionskapsel (2) zwischen das erste und das zweite Brühkamerelement (3, 4) in der Ladestellung (17) ein mechanischer Kontakt zwischen der Portionskapsel (2) und dem wenigstens einen ersten Perforationsmittel (5) durch das Beabstandungselement (50) verhindert wird, wobei das Beabstandungselement (50) an dem ersten Brühkammerelement (3) befestigt ist und zumindest teilweise elastisch in Richtung des zweiten Brühkammerelements (4) vorgespannt ist, wobei das Beabstandungselement (50) einen Metallstreifen (51) umfasst, wobei der Metallstreifen (51) ein am ersten Brühkammerelement (3) befestigtes erstes Ende (52) und ein freies zweites Ende (53) aufweist und wobei das zweite Ende (53) in der Ladestellung (17) vom ersten Brühkammerelement (3) schräg in Richtung des zweiten Brühkammerelements (4) absteht, wobei der Metallstreifen (51) im Wesentlichen parallel zur Laderichtung (18) ausgerichtet ist.

2. Brühvorrichtung (1) nach Anspruch 1, wobei der Metallstreifen (51) eine Krümmung in Richtung des zweiten Brühkammerelements (4) aufweist.

3. Brühvorrichtung (1) nach einem der vorhergehenden Ansprüche, wobei der Metallstreifen (51) ein Durchgangsloch (54) aufweist.

4. Brühvorrichtung (1) nach einem der vorhergehenden Ansprüche, wobei das erste Brühkammerelement (3) zwei erste Perforationsmittel (5) in Form von Perforationsspitzen (5') umfasst, wobei das Beabstandungselement (50) zumindest teilweise zwischen den zwei Perforationsspitzen (5') angeordnet ist und wobei in der Ladestellung (17) das Beabstandungselement (50) zumindest im Bereich zwischen den zwei Perforationsspitzen (5') vom ersten Brühkammerelement (3) beabstandet ist und wobei die zwei Perforationsspitzen (5') vorzugsweise entlang des Schwerefelds (39) unterhalb der Horizontalebene (7') angeordnet sind.

5. Brühvorrichtung (1) nach einem der vorhergehenden Ansprüche, wobei das Beabstandungselement (50) derart ausgebildet ist, dass es in der Extraktionsstellung (11) im Wesentlichen vollständig am ersten Brühkammerelement (3) anliegt.

## Claims

1. Brewing apparatus (1) for extracting a portion capsule (2), having a first brewing chamber element (3) and a second brewing chamber element (4), wherein the first and/or the second brewing chamber element (3, 4) are/is movable in an axial direction (6) between a loading position (17), in which the first and the second brewing chamber element (3, 4) are spaced apart from each other, and an extraction position (11), in which the first and the second brewing chamber element (3, 4) form a substantially closed brewing chamber (1'), wherein, in the loading position (17), the portion capsule (2) is fed in a loading direction (18) between the first and the second brewing chamber element (3, 4), wherein the loading direction (18) is oriented at right angles to the horizontal plane (7'), **characterized in that** the first brewing chamber element (3) has at least one first perforation means (5) for perforating the portion capsule (2), and **in that** the brewing apparatus (1) has a spacing element (50) which is configured such that, when the portion capsule (2) is fed between the first and the second brewing chamber element (3, 4) in the loading position (17), mechanical contact between the portion capsule (2) and the at least one first perforation means (5) is prevented by the spacing element (50), wherein the spacing element (50) is fastened to the first brewing chamber element (3) and is preloaded at least partially elastically in the direction of the second brewing chamber element (4), wherein the spacing element (50) comprises a metal strip (51), wherein the metal strip (51) has a first end (52) fastened to the first brewing chamber element (3) and a free second end (53) and wherein the second end (53) protrudes in the loading position (17) obliquely from the first brewing chamber element (3) in the direction of the second brewing chamber element (4), wherein the metal strip (51) is oriented substantially parallel to the loading direction (18) .

2. Brewing apparatus (1) according to Claim 1, wherein the metal strip (51) has a curvature in the direction of the second brewing chamber element (4).

3. Brewing apparatus (1) according to either of the preceding claims, wherein the metal strip (51) has a through-hole (54).

4. Brewing apparatus (1) according to one of the preceding claims, wherein the first brewing chamber element (3) comprises two first perforation means (5) in the form of perforation points (5'), wherein the spacing element (50) is arranged at least partially between the two perforation points (5') and wherein, in the loading position (17), the spacing element (50) is spaced apart from the first brewing chamber element (3) at least in the region between the two perforation points (5'), and wherein the two perforation points (5') are arranged preferably in the gravitational field (39) below the horizontal plane (7').

5. Brewing apparatus (1) according to one of the preceding claims, wherein the spacing element (50) is configured such that it bears substantially fully against the first brewing chamber element (3) in the extraction position (11).

## Revendications

1. . Dispositif d'infusion (1) pour l'extraction d'une capsule dosette (2), comprenant un premier élément de chambre d'infusion (3) et un deuxième élément de chambre d'infusion (4), le premier et/ou le deuxième élément de chambre d'infusion (3, 4) pouvant être déplacés le long d'une direction axiale (6) entre une position de chargement (17), dans laquelle le premier et le deuxième élément de chambre d'infusion (3, 4) sont espacés l'un de l'autre, et une position d'extraction (11), dans laquelle le premier et le deuxième élément de chambre d'infusion (3, 4) forment une chambre d'infusion essentiellement fermée (1') ; dans la position de chargement (17), une introduction de la capsule dosette (2) entre le premier et le deuxième élément de chambre d'infusion (3, 4) le long d'une direction de chargement (18) étant prévue, la direction de chargement (18) étant orientée à angle droit par rapport au plan horizontal (7'), **caractérisé en ce que** le premier élément de chambre d'infusion (3) présente au moins un premier moyen de perforation (5) pour la perforation de la capsule dosette (2), et **en ce que** le dispositif d'infusion (1) présente un élément d'espacement (50) qui est configuré de telle sorte que, lors de l'introduction de la capsule dosette (2) entre le premier et le deuxième élément de chambre d'infusion (3, 4) dans la position de chargement (17), un contact mécanique entre la capsule dosette (2) et l'au moins un premier moyen de perforation (5) est empêché par l'élément d'espacement (50), l'élément d'espacement (50) étant fixé au premier élément de chambre d'infusion (3) et étant au moins partiellement précontraint élastiquement en direction du deuxième élément de chambre d'infusion (4), l'élément d'espacement (50) comprenant une bande métallique (51), la bande métallique (51) présentant une première extrémité (52) fixée au premier élément de chambre d'infusion (3) et une deuxième extrémité libre (53), et la deuxième extrémité (53) dépassant en oblique du premier élément de chambre d'infusion (3) en direction du deuxième élément de chambre d'infusion (4) dans la position de chargement (17), la bande métallique (51) étant orientée essentiellement parallèlement à la direction de chargement (18).

2. . Dispositif d'infusion (1) selon la revendication 1, la bande métallique (41) présentant une courbure en direction du deuxième élément de chambre d'infusion (4) .

3. . Dispositif d'infusion (1) selon l'une quelconque des revendications précédentes, la bande métallique (51) présentant un trou traversant (54).

4. . Dispositif d'infusion (1) selon l'une quelconque des revendications précédentes, le premier élément de chambre d'infusion (3) comprenant deux premiers moyens de perforation (5) sous la forme de pointes de perforation (5'), l'élément d'espacement (50) étant au moins partiellement agencé entre les deux pointes de perforation (5') et, dans la position de chargement (17), l'élément d'espacement (50) étant espacé du premier élément de chambre d'infusion (3) au moins dans la zone entre les deux pointes de perforation (5' ), et les deux pointes de perforation (5') étant de préférence agencées le long du champ de pesanteur (39) en dessous du plan horizontal (7').

5. . Dispositif d'infusion (1) selon l'une quelconque des revendications précédentes, l'élément d'espacement (50) étant configuré de telle sorte qu'il s'applique essentiellement en totalité sur le premier élément de chambre d'infusion (3) dans la position d'extraction (11) .
